# FASCICULE DE BREVET EUROPEEN

(11) **EP 1 615 825 B1**
(45) Date de publication et mention de la délivrance du brevet: **23.01.2008**
(21) Numéro de dépôt: 04721219.6
(22) Date de dépôt: 17.03.2004
(51) Int. Cl.: B65B 25/02

(54) **MATERIAU A BIODEGRADABILITE AJUSTABLE NOTAMMENT POUR CONTENANT D'HORTICULTURE ET SUREMBALLAGE DE CONTENANTS**
MATERIAL MIT EINSTELLBARER BIOLOGISCHER ABBAUBARKEIT FÜR EINEN GARTENBEHÄLTER UND UMVERPACKUNG FÜR BEHÄLTER
ADJUSTABLY BIODEGRADABLE MATERIAL FOR A HORTICULTURAL CONTAINER AND OVERPACKAGING FOR CONTAINERS

(30) Priorité: 17.03.2003 FR 0303227
(43) Date de publication de la demande: 18.01.2006
(73) Titulaire: Alliance 47, 79300 Bressuire (FR)
(72) Inventeur: VARACHEZ, Jean-Pierre, F-86130 Jaunay-Clan (FR); BARBIER, Jacques, F-86360 Montamise (FR)
(74) Mandataire: Fantin, Laurent
(86) Numéro de dépôt international: PCT/FR2004/050110
(87) Numéro de publication internationale: WO 2004/084619

(56) Documents cités:
- EP-A- 0 984 039
- FR-A- 2 829 357
- US-A- 3 852 913
- US-B1- 6 329 032
- KOENIG M F ET AL: "Biodegradable blends and composites of polycaprolactone and starch derivatives" POLYMER, ELSEVIER SCIENCE PUBLISHERS B.V, GB, vol. 36, no. 9, 1 avril 1995 (1995-04-01), pages 1877-1882, XP004065527 ISSN: 0032-3861
- TOKIWA, Y. ET AL TOKIWA, Y. ET AL: "Enzymic degradation of polymer blends Enzymic degradation of polymer blends" STUDIES IN POLYMER SCIENCE , 12(BIODEGRADABLE PLASTICS AND POLYMERS), 190-9 CODEN: SPLSEA; ISSN: 0922-5579 STUDIES IN POLYMER SCIENCE , 12(BIODEGRADABLE PLASTICS AND POLYMERS), 190-9 CODEN: SPLSEA; ISSN: 0922-5579, 1994, XP0009021454
- PATENT ABSTRACTS OF JAPAN vol. 0182, no. 68 (C-1202), 23 mai 1994 (1994-05-23) & JP 6 041344 A (AGENCY OF IND SCIENCE & TECHNOL; others: 01), 15 février 1994 (1994-02-15)

## Description

La présente invention concerne un matériau à biodégradabilité ajustable pour la réalisation de contenants horticoles ou pour de suremballages de contenants.

On connaît des contenants horticoles parfaitement adaptés dans leur forme permettant la mise en culture et le développement des végétaux. De tels contenants constituent un grand progrès par rapport aux contenants réalisés en un matériau non dégradable, issu de la transformation de produits pétroliers, généralement de couleur noire, la couleur étant engendrée par les charges nécessaires pour leur fabrication.

Un inconvénient important de ces contenants était leur non imprimabilité or l'évolution est telle que les contenants eux-mêmes doivent pouvoir porter des mentions imprimées, soit pour reproduire des données images ou des données textes associées au plant du contenant.

Un tel contenant de l'art antérieur ayant apporté un nette amélioration de l'offre est décrit et revendiqué dans la demande internationale de brevet WO/FR02 03037, au nom du même demandeur.

Cette demande propose un contenant réalisé en un matériau imprimable avec une grande définition, dont la géométrie permet le recours à des machines automatisées de mise en pot, qui est réalisable à partir d'un flan découpé après avoir été imprimé, qui permet la respiration des végétaux même lorsque les contenants reposent sur une surface imbibée d'eau ou de liquide fertilisant.

On peut ainsi disposer sur le contenant directement les références du produit, la date/âge du plant, les coordonnées du producteur, les informations sur les conditions de mise en terre du végétal par l'acheteur, les conseils sur la pousse et le suivi, le tout agrémenté de représentations dont on sait qu'elles ont un pouvoir auto-explicatif, ce qui évite la perte des étiquettes et tous les inconvénients liés à l'amovibilité des systèmes d'informations connus,

Il conviendrait que ce contenant puisse être réalisé en un matériau dont les qualités de biodégradabilité soient parfaitement adaptées.

De plus non seulement, il serait souhaitable de disposer d'un matériau biodégradable mais un matériau dont la biodégradabilité est ajustable dans le temps.

Certains plants nécessitent une durée de conservation de 6 mois tandis que d'autres doivent être conservés pendant deux ou trois ans pour donner un ordre de grandeur. Cette biodégradabilité doit alors être ajustée.

Après usage, il faut se débarrasser des contenants vides mais la biodégradabilité doit alors être rapide. Il est à préciser là qu'il s'agit d'une biodégradabilité vraie, c'est-à-dire une élimination totale par le travail de micro-organismes et non la simple dégradation par les rayonnements tels que les ultraviolets qui dégradent plutôt par fragmentation.

On constate à la lecture de ces contraintes que les fournisseurs se heurtent à des conditions légèrement antinomiques : il faut que le contenant soit parfaitement intact pendant une certaine durée correspondant à la présentation et à la vente, donc avec une bonne conservation des impressions, puisqu'il se dégrade rapidement pour assurer son élimination.

De plus, pendant cette durée où le contenant doit rester intact, il faut qu'il puisse être arrosé, en contact avec des produits de traitement et/ou de fertilisation sans pour autant se dégrader.

Ce contenant doit aussi présenter des propriétés mécaniques adaptées et notamment, il doit rester manipulable, ne pas se déformer, ne pas se délaminer ou conduire à des cloquages.

On connaît par ailleurs des brevets américains US 3 852 913 et US 3 919 163 qui décrivent un matériau biodégradable permettant la réalisation de contenants spécifiques.

En effet, en vue d'assurer une reforestation, il est prévu des machines de plantation qui utilisent des canons à implanter. De ce fait, il faut concevoir des contenants en forme d'ogive qui sont introduits dans le sol directement avec le plant à l'intérieur par ledit canon.

De ce fait, il faut une résistance mécanique suffisante du contenant pour permettre cette opération mais en assurant une biodégradabilité pour assurer le développement libre du plant et la non pollution du sol à chaque implantation.

Ce matériau est à base de polymères de la famille des caprolactones soit sous forme d' homopolymères soit sous forme de copolymères avec des polymères obtenus par condensation complétés par des charges, talc, silice, carbone et/ou des plastifiants, des fertilisants, des pesticides, des fongicides ou des insecticides.

On peut citer dans cette même famille de produits le brevet US 3 929 937.

On note que le problème posé est totalement différent et on constate que le problème de l'imprimabilité ne se pose aucunement, de même que le réglage de la durabilité sous forme intacte.

En effet, il suffit que le contenant soit suffisamment rigide pendant une période donnée pour permettre une introduction en force dans le sol même si lors de cette opération, il y a dégradation ou fragmentation mécanique, au contraire une telle fragmentation permet le développement racinaire plus rapidement.

On constate que dans ce cas, une autre différence notable concerne le mode de mise en sol puisque dans le cas de ces procédés, le plant est mis en sol dans son contenant.

L'objet de la présente invention est un matériau dont la durée de biodégradabilité est ajustable, qui est susceptible d'être calandré, qui est imprimable dans des conditions d'impression et de séchage des encres comparables avec l'existant et dont les propriétés mécaniques sont elles-mêmes adaptées.

A cet effet, le matériau utilisable pour la réalisation de contenants horticoles à biodégradabilité ajustable et imprimable, se caractérise en ce qu'il comprend un alliage de 50 à 70% en poids de polycaprolactone et de 50 à 30% de polystyrène ainsi qu'une charge végétale variant de 15 à 50% en poids de l'ensemble.

La charge végétale est choisie parmi le blé et/ou le maïs et/ou la cellulose.

Selon un mode de réalisation préférentiel, l'alliage comprend 60% en poids de polycaprolactone et 40% de polystyrène, la charge végétale étant de 30% en poids de l'ensemble.

L'invention couvre aussi le procédé de fabrication d'une feuille de matériau par calandrage ainsi que le contenant horticole à biodégradabilité ajustable et imprimable réalisé.

L'invention concerne aussi un procédé de fabrication d'un contenant horticole à biodégradabilité ajustable en conservant l'imprimabilité, qui se caractérise en ce que l'on fait varier le taux et la nature de la charge végétale pour ajuster la biodégradabilité, à paramètres mécaniques sensiblement constants.

Le matériau selon l'invention est maintenant décrit en détail avec son procédé de fabrication.

Les figures annexées représentent les courbes des résultats obtenus pour ce matériau permettant de caractériser le matériau.
- figures 1A et 1B - modules de traction en fonction des compositions d'alliage pour le CAPA 6500 et 6800.
- figures 2A et 2B : contraintes à la rupture en fonction des compositions d'alliage pour le CAPA 6500 et 6800.
- figures 3A et 3B : modules de flexion en fonction des compositions d'alliage pour le CAPA 6800 et 6500.
- figures 4A et 4B : indice de viscosité (MFI) en fonction des compositions d'alliage pour le CAPA 6800 et 6500, et
- figures 5A et 5B : indice de biodégradabilité par perte de poids exprimée en pourcentage en fonction des compositions d'alliage pour le CAPA 6500 et 6800.

### I/ Analyse du polymère pur:

Le matériau est issu de la famille des polycaprolactones qui subissent des adjonctions permettant de répondre à l'ensemble des contraintes imposées.

Les polycaprolactones ne peuvent être utilisés seuls pour atteindre les performances souhaitées et notamment la biodégradabilité ajustable.

De plus, il faut que le matériau puisse subir un calandrage, soit imprimable sans traitement corona, que les feuilles ainsi obtenues après calandrage puissent être découpées, rainées et pliées puis enfin collées.

De ce fait, il faut adjoindre des charges, des plastifiants et/ou des rigidifiants.

On choisit deux bases de caprolactones ayant des grades différents. On sait en effet que le grade correspond à une viscosité elle-même reflet d'une masse moléculaire.

On procède alors à des essais d'introduction de polystyrène, notamment de polystyrène choc qui est le polymère associé.

Ce polymère est introduit à raison de 15, 30 et 45 %.

Les propriétés mécaniques étudiées sont :
a) le module de traction,
b) la contrainte à la rupture
c) le module de flexion
d) le MFI qui est le Melt Flow Index ou l'indice de fluidité, et
e) la biodégradabilité en milieu aqueux.

Le mélange est réalisé par compoundage qui est une préparation mécanique avec malaxage, fusion, mélangeage, extrusion, refroidissement et granulation par découpe des joncs extrudés.

Des éprouvettes normalisées sont ensuite réalisées par injection en sorte de permettre les mesures des différents paramètres retenus.

Les deux produits du commerce sont des polycaprolactones disponibles au près de la société Solvay et connus sous les références CAPA 6500 et 6800.

### a) Module de traction

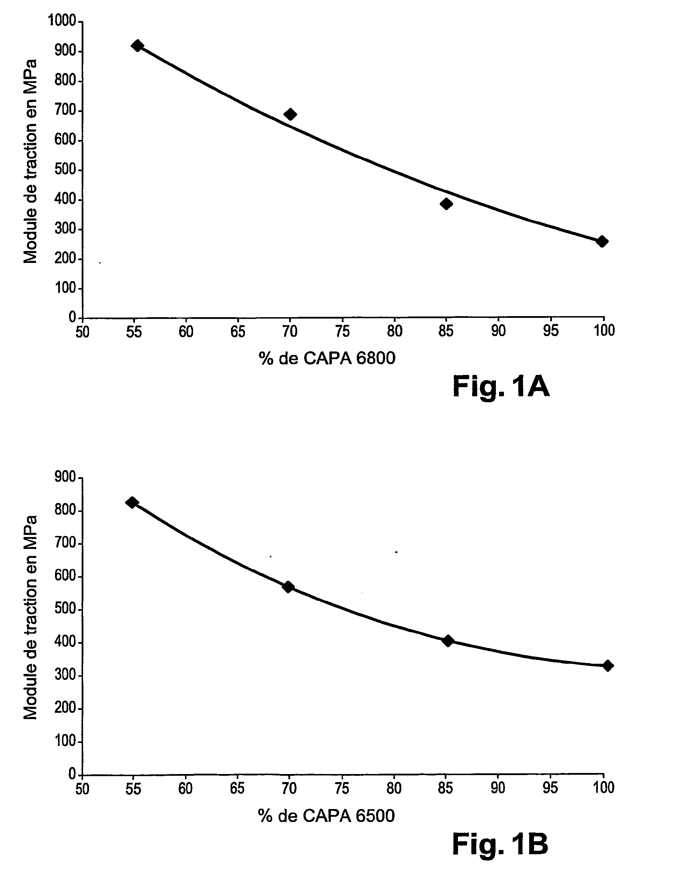

Les figures 1A et 1B montrent les courbes obtenues des modules de traction.

Des rapports de l'ordre de 50% à 70% de chacun des deux polycaprolactones retenus et donc de 50% à 30% de polystyrène permettent d'atteindre les valeurs souhaitées pour la réalisation de contenants dans des dimensions volumiques de l'ordre du décimètre cube.

### b) Contrainte à la rupture

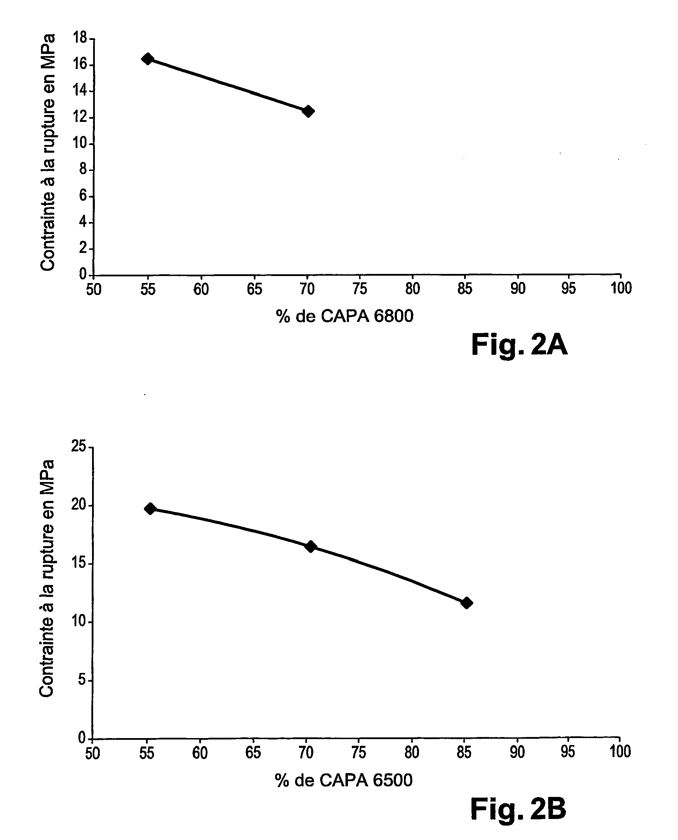

Les figures 2A et 2B montrent les courbes obtenues.

On note que dans les fortes concentrations de polycaprolactones, la déformation se produit avec des allongements sans rupture.

Le meilleur compromis pour répondre à la réalisation de contenants horticoles consiste à introduire entre 50 et 70% de polycaprolactone; ceci pour les deux grades et le solde en polystyrène.

### c) Module de flexion

La rupture n'est jamais atteinte pour les deux grades retenus donc a fortiori dans la composition se situant dans la plage de 50 à 70% de polycaprolactone pour le solde en polystyrène.

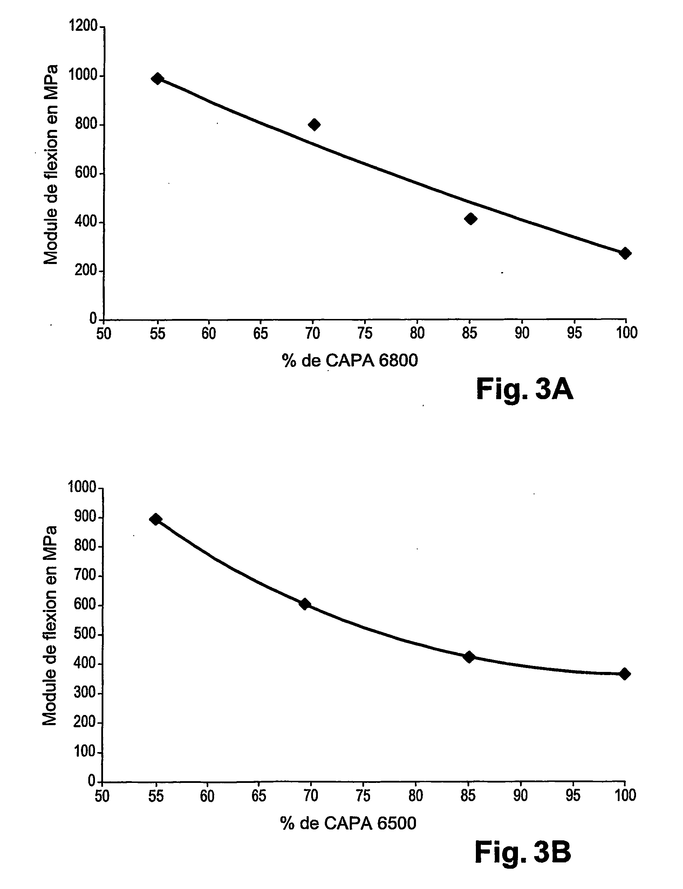

Les courbes des résultats obtenus pour les deux grades 6800 et 6500 sont regroupées sur les figures 3A et 3B.

### d) Indice de fluidité

Les mesures sont réalisées avec un plastomètre commercialisé sous la dénomination "ZWICK". Elles concernent l'indice de fluidité à chaud en masse et en volume. Il s'agit d'extruder sous poids constant des volumes de polymère à travers une filière donnée à une température fixée et constante.

Les paramètres fixés sont la température de travail, le poids de la charge exercée et la durée d'extrusion.

La valeur souhaitée étant un débit de l'ordre de 3 à 5 g toutes les dix minutes, il convient de retenir la plage de valeurs comprises entre 50 et 70% de polycaprolactone ceci pour les deux grades.

On note de façon normale que le polycaprolactone d'indice plus faible le 6500 donc de masse moléculaire plus faible, permet d'obtenir une fluidité plus importante.

Un tel paramètre est important pour permettre un calandrage satisfaisant des feuilles prévues pour être imprimées, découpées, pliées et collées.

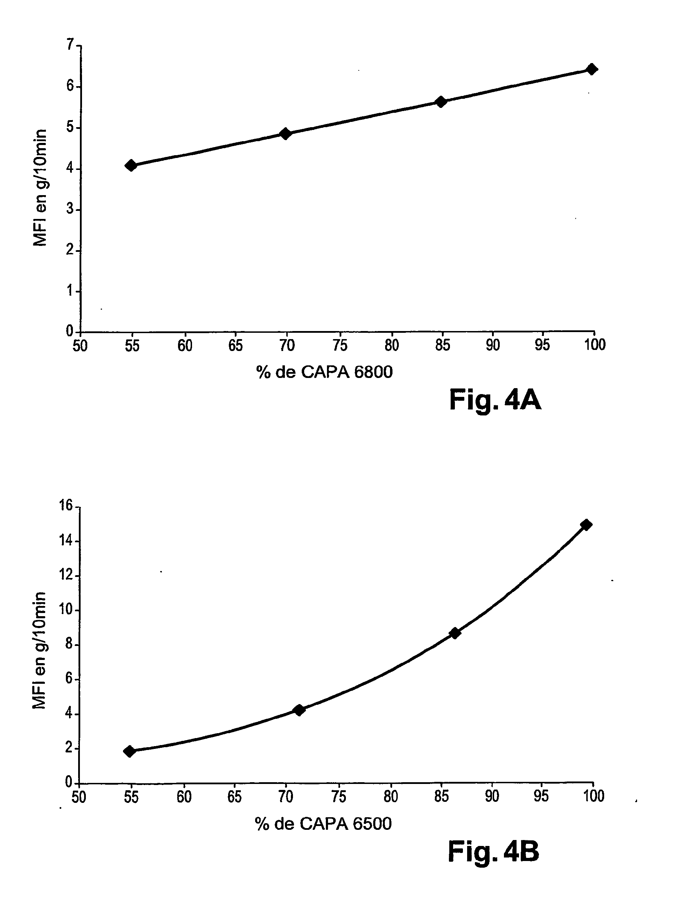

Les résultats sous forme de courbes, sont regroupés pour les 6800 et 6500 sur les figures 4A et 4B.

### e) Biodégradabilité

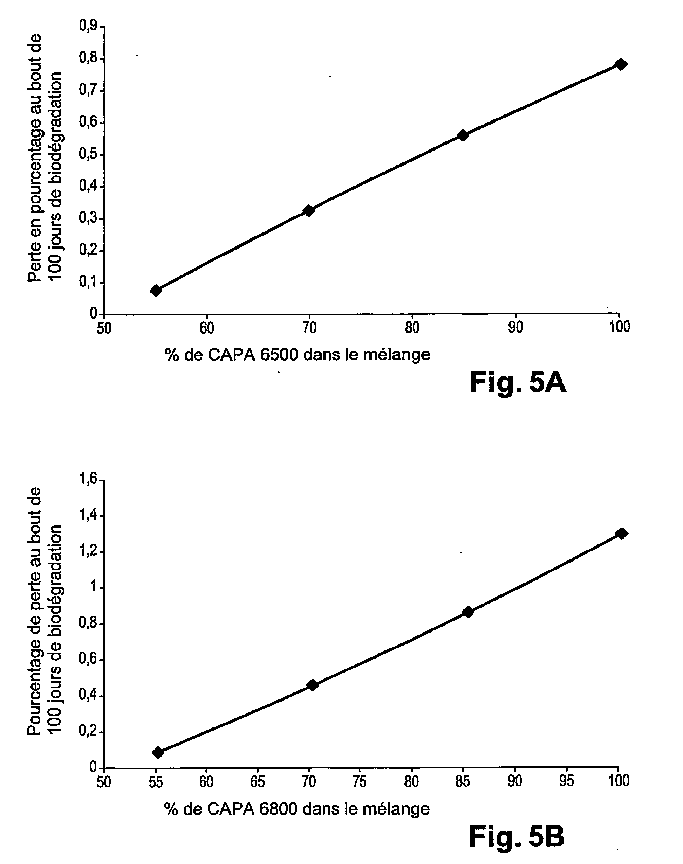

On retrouve la synthèse des résultats sur les courbes des figures 5A et 5B.

Le test est réalisé par immersion dans de l'eau pure sur une durée de 100 jours au cours desquels on mesure la perte de matière après séchage à froid.

On constate une biodégradabilité qui augmente avec le pourcentage de polycaprolactone.

Le choix de la durée permet d'avoir des valeurs significatives mais la durée de 100 jours ne présage pas des durées réelles susceptibles d'être atteintes.

### II/ Analyse du polymère avec une charge végétale :

Afin d'ajuster la biodégradabilité, selon l'invention, on intègre à l'alliage polycaprolactone/polystyrène une charge végétale.

Les essais portent sur des alliages de CAPA 6500 / polystyrène dans un rapport compris entre 50 et 70% de polycaprolactone.

La charge végétale est comprise entre 15 et 50%. Elle est choisie parmi les farines de maïs, les farines de blé et les farines de cellulose en l'occurrence des farines de coques de lupin afin de permettre de couvrir toute la plage nécessaire de durées de biodégradabilité.

Les paramètres analysés sont les propriétés mécaniques et la biodégradabilité.

### A/ Propriétés mécaniques :

### 1/ Variations des types de charge

L'alliage 70/30 utilisé comprend 70% de polycaprolactone et 30% de polystyrène puisque c'est l'alliage dont on sait qu'il présente des valeurs déjà satisfaisantes.

| | Module traction (MPa) | Module flexion (MPa) | Rupture traction (MPa) | Indice fluidité |
|---|---|---|---|---|
| Alliage pur | 581 | 543 | 11,2 | 4,8 |
| Blé (35 %) | 788 | 1013 | 11,3 | 2,0 |
| Maïs (35%) | 713 | 871 | 10,9 | 1,5 |
| Cellulose (35%) | 743 | 937 | 13,8 | 1,4 |

Les propriétés mécaniques se trouvent améliorées par la charge végétale, à charge végétale constante, 35% en poids de l'ensemble.

### 2/ Variations du taux de charge végétale :

Les essais portent sur un alliage 60/40 avec une charge à base de farines de coques de lupin donc de la cellulose dans des quantités de 15, 30 et 50%.

On analyse la variation des propriétés mécaniques.

| | Module traction (MPa) | Module flexion (MPa) | Rupture traction (MPa) | Indice fluidité |
|---|---|---|---|---|
| Alliage pur | 713 | 762 | 15,4 | 3,0 |
| Cellulose (15%) | 998 | 1274 | 17,1 | 1,4 |
| Cellulose (30%) | 1181 | 1281 | 12,9 | 1,9 |
| Cellulose (50%) | 866 | 1047 | 15,4 | 1,9 |

On constate que l'augmentation des propriétés mécaniques est optimale en ce qui concerne la celullose lorsque la charge est de l'ordre de 30%.

D'autres essais montrent, notamment pour le mais et le blé, que les propriétés mécaniques sont améliorées également dans la plage de 15 à 50% de charge végétale.

### 3/ Variations du taux de polycaprolactone :

On analyse la variation du taux de polycaprolactone, 50, 60 et 70%, le polystyrène variant proportionnellement, à charge végétale constante, en l'occurrence 30%, sur les propriétés mécaniques, ceci pour le blé, le mais et la cellulose.

| Blé (30%) | Module traction (MPa) | Module flexion (MPa) | Rupture traction (MPa) | Indice fluidité |
|---|---|---|---|---|
| Alliage (50/50) | 1068 | 1343 | 18,4 | 1,2 |
| Alliage (60/40) | 1181 | 1281 | 12,9 | 1,9 |
| Alliage (70/30) | 788 | 1013 | 11,3 | 2 |

| Maïs (30%) | Module traction (MPa) | Module flexion (MPa) | Rupture traction (MPa) | Indice fluidité |
|---|---|---|---|---|
| Alliage (50/50) | 1067 | 1326 | 19,3 | 1,3 |
| Alliage (60/40) | 942 | 1072 | 16,3 | 1,9 |
| Alliage (70/30) | 713 | 871 | 10,9 | 1,5 |

| Cellulose (30%) | Module traction (MPa) | Module flexion (MPa) | Rupture traction (MPa) | Indice fluidité |
|---|---|---|---|---|
| Alliage (50/50) | 1095 | 1485 | 17,8 | 1,3 |
| Alliage (60/40) | 1171 | 1349 | 14,7 | 1,9 |
| Alliage (70/30) | 743 | 936 | 13,8 | 1,4 |

La valeur de 60% de polycaprolactone / 40% de polystyrène est de nouveau constatée comme particulièrement intéressante.

### B/ Biodégradabilité :

### 1/ Variation des types de charge

Cette étude est réalisée en mesurant la perte de masse d'échantillons placés en immersion dans de l'eau, au bout de 300 heures.

L'alliage utilisé est intermédiaire et comprend 60% de polycaprolactone et 40% de polystyrène.

On utilise des charges végétales à 35%.

| | Perte de masse en % à 300 h |
|---|---|
| Alliage (60/40) / Blé (35%) | - 1,2 |
| Alliage (60/40) / Maïs (35%) | - 0,6 |
| Alliage (60/40) / Cellulose (35%) | - 4,2 |

On note une très forte biodégradabilité avec l'utilisation de la cellulose.

### 2/ Variations des taux de charge :

Des essais ont été réalisés avec des charges végétales variables avec un même type de charge.

Pour les essais qui suivent, on a introduit de la farine de mais dans des proportions de 15, 30 et 50%.

| | Perte de masse en % à 300 h |
|---|---|
| Alliage (60/40) / Maïs (15%) | - 0,03 |
| Alliage (60/40) / Maïs (30%) | - 0,48 |
| Alliage (60/40) / Maïs (50%) | - 0,78 |

On note une variation de la biodégradabilité sur une plage très importante puisque la perte est multipliée par un coefficient de près de 30 pour le maïs sur la plage de 15 à 50% en poids de charge végétale.

Pour le blé, on obtient des variations de près de 10 et pour la cellulose de près de 5.

### 3/ Variations du taux de polycaprolactone:

On analyse la variation du taux de polycaprolactone, 50, 60 et 70% à charge végétale constante, en l'occurrence 30%, sur les capacités de biodégradabilité, ceci pour le blé, le maïs et la cellulose.

| Blé (30%) | Perte de masse en % à 300 h |
|---|---|
| Alliage (50/50) | - 0,97 |
| Alliage (60/40) | - 2,15 |
| Alliage (70/30) | - 1,80 |

| Maïs (30%) | Perte de masse en % à 300 h |
|---|---|
| Alliage (50/50) | - 0,48 |
| Alliage (60/40) | - 1,03 |
| Alliage (70/30) | - 0,70 |

| Cellulose (30%) | Perte de masse en % à 300 h |
|---|---|
| Alliage (50/50) | - 2,04 |
| Alliage (60/40) | - 5,03 |
| Alliage (70/30) | - 4,60 |

On peut en déduire que la plage de valeurs de 50 à 70% de polycaprolactone est satisfaisante et que le rapport 60% de polycaprolactone /40% de polystyrène est optimisé.

### C/ Imprimabilité

Une fois le produit chargé retenu, il faut vérifier les possibilités d'impression, ceci pour différents critères que sont l'imprimabilité elle-même mais aussi la brillance, le séchage, la rigidité, la blancheur du produit après calandrage et l'opacité.

La comparaison est faite entre le produit avec 70% de polycaprolactone / 30% de polystyrène et le meilleur produit recyclable du commerce et actuellement utilisé dans le cadre de la mise en oeuvre de la demande de brevet précitée WO/FR02 03037 au nom du même titulaire.

L'échelle varie de 1 à 5, pour chacun des paramètres.

| | Imprimabilité | Brillance | Séchage | Rigidité | Blancheur | Opacité |
|---|---|---|---|---|---|---|
| Référence | 2 | 3 | 2 | 5 | 4 | 5 |
| Alliage 70/30 | 3 | 3 | 2 | 4 | 5 | 5 |

On constate à nouveau que seule la rigidité est légèrement inférieure tandis que tous les autres paramètres sont au moins aussi intéressants, voire supérieurs pour l'imprimabilité pure et pour la blancheur qui permet une meilleure approche des couleurs.

L'obtention des feuilles de ce matériau est réalisée de préférence par calandrage.

Les contenants horticoles sont ensuite obtenus par découpe de flans dans ces feuilles de matériau à biodégradabilité contrôlée. Une découpe particulièrement satisfaisante est celle réalisée selon l'enseignement de la demande de brevet précitée WO/FR02 03037 au nom du même titulaire qui est introduite dans la présente demande en ce qui concerne les caractéristiques géométriques du contenant qui y est décrit.

Pour la réalisation de ce calandrage, on peut ensuite ajouter des adjuvants pour faciliter les opérations de calandrage, notamment des plastifiants qui sont introduits en quantités très faibles et qui ne modifient pas les propriétés décrites ci-avant ou des agents de blanchiment tels que l'oxyde de titane.

Les applications de la présente invention concernent les contenants horticoles au sens large pour les plants quelles que soient les variétés.

Des tests ont montré par ailleurs que ce matériau ne présente aucune toxicité vis-à-vis des plants.

De façon connue, il est aussi possible d'adjoindre des agents fongicides, insecticides, fertiligènes à ce matériau si nécessaire sans pour cela sortir de la présente invention.

Le matériau est également particulièrement préconisé pour fabriquer des suremballages qui viennent autour de contenants.

En effet, de tels suremballages sont très utiles car il sont imprimables et portent donc toutes les indications nécessaires pour la commercialisation et peuvent recevoir des contenants tout autre que ceux de la présente invention tels que des pots en tourbe dont on sait qu'ils ne peuvent aucunement être imprimés.

Par contre la biodégradabilité de ces suremballages est une richesse puisque ces pots en tourbe particulièrement écologiques et à biodégradabilité assurée ne sont pas pollués par des suremballages issus de l'industrie du pétrole.

On peut aussi ajuster de façon tout à fait appropriée la souplesse des feuilles du matériau ainsi obtenu avec des plastifiants, ceux-ci étant également biodégradables choisis parmi les huiles végétales et leurs dérivés, l'ester éthylique de colza ou l'acide oléique.

La présente demande a été décrite à partir de nombreux essais qui n'ont aucun caractère limitatif.

## Revendications

1. Matériau imprimable utilisable pour la réalisation de contenants horticoles et/ou de suremballages de contenants, comprenant un alliage de 50 à 70% en poids de polycaprolactone et de 50 à 30% de polystyrène, ainsi qu'une charge végétale de façon à ajuster la biodégradabilité,
**caractérisé en ce que** la charge végétale varie de 15 à 50% en poids de l' ensemble.

2. Matériau imprimable, selon la revendication 1, **caractérisé en ce que** la charge végétale est de 30% en poids de l'ensemble.

3. Matériau imprimable, selon la revendication 1 ou 2, **caractérisé en ce que** la charge végétale est choisie parmi le blé et/ou le maïs et/ou la cellulose.

4. Matériau imprimable, selon l'une quelconque des revendications précédentes, **caractérisé en ce que** l'alliage comprend 60% en poids de polycaprolactone et 40% de polystyrène, la charge végétale étant de 30% en poids de l'ensemble.

5. Matériau imprimable, selon la revendication 4, **caractérisé en ce qu'**il incorpore un plastifiant biodégradable choisi parmi les huiles végétales et leurs dérivés, l'ester éthylique de colza ou l'acide oléique.

6. Procédé de fabrication d'une feuille de matériau selon l'une quelconque des revendications précédentes, **caractérisé en ce que** l'on procède à un calandrage du matériau obtenu.

7. Contenant horticole ou suremballage de contenants à biodégradabilité ajustable et imprimable réalisé en matériau selon l'une des revendications 1 à 5, à partir d'une feuille calandrée, par découpage, pliage et collage.

8. Procédé de fabrication d'un contenant horticole et/ou d'un suremballage à biodégradabilité ajustable en conservant l'imprimabilité utilisant le matériau selon l'une quelconque des revendications 1 à 5, **caractérisé en ce que** l'on fait varier le taux et la nature de la charge végétale pour ajuster la biodégradabilité, à paramètres mécaniques sensiblement constants.

9. Procédé de fabrication d'un contenant horticole et/ou d'un suremballage de contenants, à biodégradabilité ajustable en conservant l'imprimabilité utilisant le matériau selon l'une quelconque des revendications 1 à 5, **caractérisé en ce que** l'on utilise un polycaprolactone de masse moléculaire comprise entre 6500 et 6800.

## Claims

1. A printable material that can be used for producing horticultural containers and/or packaging for containers, comprising a blend of 50%-70% polycaprolactone by weight and 50%-30% polystyrene, as well as a vegetable filler so as to adjust the biodegradability, **characterised in that** the vegetable filler varies from 15% to 50% of the whole by weight.

2. A printable material according to claim 1, **characterised in that** the vegetable filler is 30% of the whole by weight.

3. A printable material according to claim 1 or 2, **characterised in that** the vegetable filler is chosen from wheat and/or maize and/or cellulose.

4. A printable material according to any one of the preceding claims, **characterised in that** the blend comprises 60% polycaprolactone by weight and 40% polystyrene, the vegetable filler being 30% of the whole by weight.

5. A printable material according to claim 4, **characterised in that** it incorporates a biodegradable plasticiser chosen from vegetable oils and derivatives thereof, rapeseed ethyl ester or oleic acid.

6. A method of manufacturing a sheet of material according to any one of the preceding claims, **characterised in that** the material obtained is calendered.

7. A horticultural container or container packaging with adjustable biodegradability and printable, produced from material according to one of the claims 1 to 5, from a calendered sheet, by cutting, folding and adhesive bonding.

8. A method of manufacturing a horticultural container and/or packaging with adjustable biodegradability while preserving printability using the material according to any one of claims 1 to 5, **characterised in that** the level and nature of the vegetable filler is varied in order to adjust the biodegradability, with substantially constant mechanical parameters.

9. A method of manufacturing a horticultural container and/or container packaging, with adjustable biodegradability while preserving printability, using a material according to any one of claims 1 to 5, **characterised in that** a polycaprolactone with a molecular mass of between 6500 and 6800 is used.

## Patentansprüche

1. Bedruckbarer Werkstoff, verwendbar zur Herstellung von Pflanzenbehältern und/oder von Umverpackungen von Behältern, umfassend eine Legierung von 50 bis 70 Gew.-% Polycaprolacton und von 50 bis 30 % Polystyrol, sowie einen pflanzlichen Anteil zur Anpassung der biologischen Abbaubarkeit, **dadurch gekennzeichnet, dass** der pflanzliche Anteil im Bereich zwischen 15 und 50 Gew.-% der Gesamtmasse variiert.

2. Bedruckbarer Werkstoff nach Anspruch 1, **dadurch gekennzeichnet, dass** der pflanzliche Anteil 30 Gew.-% der Gesamtmasse beträgt.

3. Bedruckbarer Werkstoff nach Anspruch 1 oder 2, **dadurch gekennzeichnet, dass** der pflanzliche Anteil ausgewählt ist aus der Gruppe umfassend Weizen und/oder Mais und/oder Zellulose.

4. Bedruckbarer Werkstoff nach einem der vorstehenden Ansprüche, **dadurch gekennzeichnet, dass** die Legierung 60 Gew.-% Polycaprolacton und 40 % Polystyrol umfasst, wobei der pflanzliche Anteil 30 Gew.-% der Gesamtmasse beträgt.

5. Bedruckbarer Werkstoff nach Anspruch 4, **dadurch gekennzeichnet, dass** ein biologisch abbaubarer Weichmacher darin eingearbeitet ist, der ausgewählt ist aus der Gruppe umfassend pflanzliche Öle und deren Derivate, Rapsethylester, Ölsäure.

6. Verfahren zur Herstellung einer Werkstofffolie nach einem der vorstehenden Ansprüche, **dadurch gekennzeichnet, dass** der erhaltene Werkstoff kalandriert wird.

7. Bedruckbarer Pflanzenbehälter bzw. bedruckbare Umverpackung von Behältern mit anpassbarer biologischer Abbaubarkeit, hergestellt aus einem Werkstoff nach einem der Ansprüche 1 bis 5, ausgehend von einer kalandrierten Folie, durch Beschneiden, Falten und Kleben.

8. Verfahren zur Herstellung eines Pflanzenbehälters und/oder einer Umverpackung mit anpassbarer biologischer Abbaubarkeit unter Beibehaltung der Bedruckbarkeit und unter Verwendung des Werkstoffs nach einem der Ansprüche 1 bis 5, **dadurch gekennzeichnet, dass** zur Anpassung der biologischen Abbaubarkeit die Größe und Beschaffenheit des pflanzlichen Anteils variiert wird, wobei die mechanischen Parameter im Wesentlichen konstant bleiben.

9. Verfahren zur Herstellung eines Pflanzenbehälters und/oder einer Umverpackung mit anpassbarer biologischer Abbaubarkeit unter Beibehaltung der Bedruckbarkeit und unter Verwendung des Werkstoffs nach einem der Ansprüche 1 bis 5, **dadurch gekennzeichnet, dass** ein Polycaprolacton verwendet wird, dessen Molekularmasse zwischen 6500 und 6800 beträgt.
